# FASCICULE DE BREVET EUROPEEN

(11) **EP 0 983 925 B1**
(45) Date de publication et mention de la délivrance du brevet: **04.06.2003**
(21) Numéro de dépôt: 99401846.3
(22) Date de dépôt: 21.07.1999
(51) Int. Cl.: B62D 1/10, B60R 21/20

(54) **Dispositif de commande de direction de véhicule automobile comportant un bloc fixe d'accessoires agencé au centre volant**
Kraftfahrzeug-Lenkeinrichtung mit einem im Lenkradzentrum fest angeordneten Steuerblock
Motor vehicle steering device with a fixed control block placed in the centre of the steering wheel

(30) Priorité: 04.09.1998 FR 9811070
(43) Date de publication de la demande: 08.03.2000
(73) Titulaire: Renault s.a.s., 92100 Boulogne Billancourt (FR)
(72) Inventeur: Gallinato-Contino, Roland, 83780 Flayosc (FR)

(56) Documents cités:
- EP-A- 0 825 089
- CA-A- 1 318 833

## Description

La présente invention concerne un dispositif de commande de direction de véhicule automobile.

L'invention concerne un dispositif du type comportant une colonne de direction tubulaire, un arbre de direction monté tournant à l'intérieur de la colonne de direction, et un volant de direction lié en rotation à l'extrémité supérieure libre de l'arbre de direction.

Le volant comporte généralement une jante annulaire qui est reliée, par des branches d'orientation sensiblement radiale, à un moyeu de volant qui est lui-même lié en rotation à l'extrémité supérieure libre de l'arbre de direction.

Selon une conception connue, un tel dispositif de direction peut comporter un bloc d'accessoires, comportant notamment des commandes et un coussin gonflable de sécurité, monté au centre du volant et qui comporte par exemple une commande d'avertisseur sonore ainsi que d'autres interrupteurs et commutateurs de commande de différents accessoires et équipements du véhicule.

Selon un agencement connu, le bloc d'accessoires monté au centre du volant est fixe en rotation par rapport à la colonne de direction, c'est-à-dire qu'il ne tourne pas avec le volant, son montage étant assuré à cet effet par l'intermédiaire d'un support tubulaire coaxial à l'arbre de direction, et un faisceau de raccordement électrique s'étend, depuis le bloc d'accessoires, axialement puis radialement à travers le support tubulaire en direction d'un boîtier fixe.

Un exemple d'un tel agencement d'un bloc central d'accessoires fixe en rotation est décrit et représenté dans le document FR-A-2.720.709.

Cet agencement immobile en rotation du bloc d'accessoires, tout en permettant un entraînement en rotation de l'arbre de direction par le volant, est obtenu par un mécanisme à engrenages qui est intégré à l'intérieur de la colonne de direction, à la partie inférieure de cette dernière, de sorte que les différents composants du mécanisme encombrent considérablement cette zone de la colonne de direction et en rendent la réalisation, l'assemblage et le montage particulièrement complexes et onéreux.

Par ailleurs, la solution proposée dans ce document peut aboutir à un défaut de positionnement angulaire du bloc d'accessoires, résultant des jeux de fonctionnement des différents composants du mécanisme.

Enfin, la conception proposée dans ce document est particulièrement complexe à mettre en oeuvre dans le cas où l'ensemble de la colonne de direction est réglable tant en hauteur qu'en inclinaison pour adapter le poste de conduite à la morphologie du conducteur.

On a proposé, dans le document EP-A-0.825.089, un dispositif de direction du type mentionné précédemment qui permet de remédier aux inconvénients qui viennent d'être évoqués, correspondant en outre au préambule de la revendication 1.

Ce document propose un dispositif de commande de direction de véhicule automobile comportant un faisceau de raccordement électrique qui s'étend, depuis le bloc central fixe d'accessoires, axialement à travers le support fixe pour être relié radialement à un élément extérieur de connexion, et du type dans lequel le support fixe est monté à l'extrémité supérieure de la colonne de direction tubulaire, le moyeu de volant est monté tournant par rapport au support fixe, et le moyeu de volant est lié en rotation à l'arbre de direction par un mécanisme à engrenages comportant deux organes dentés coaxiaux liés en rotation au moyeu de volant et à l'arbre de direction qui engrènent avec un organe denté intermédiaire excentré par rapport à l'axe de la colonne de direction.

La conception proposée dans ce document, si elle permet de remédier aux inconvénients qui ont été mentionnés, à toutefois pour inconvénients de comporter un grand nombre de composants à engrenages dont la réalisation et l'assemblage sont complexes et coûteux. De plus, cette conception fait appel à un support fixe en deux parties, lui-même complexe et coûteux, et elle aboutit aussi à un encombrement général, selon la direction radiale, qui est trop important et qui peut être dangereux en cas de choc des membres inférieurs du conducteur avec la partie correspondante de la colonne de direction.

Afin de remédier à ces inconvénients, l'invention propose un dispositif du type mentionné précédemment, caractérisé en ce que l'organe denté intermédiaire est un pignon denté dont une première extrémité axiale engrène avec un premier manchon denté intérieurement lié en rotation et coaxial au moyeu de volant et dont la seconde extrémité engrène avec un second manchon denté intérieurement et lié en rotation à l'arbre de direction.

Selon d'autres caractéristiques de l'invention:
- le faisceau de raccordement s'étend axialement à l'intérieur du corps central du support fixe qui traverse le premier manchon denté ;
- le support fixe comporte une jupe tubulaire qui est reliée radialement au corps central par une partie de liaison qui s'étend entre les extrémités axiales en vis-à-vis des deux manchons dentés ;
- le faisceau de raccordement s'étend axialement à travers un passage axial formé dans le corps central qui se prolonge par un passage radial débouchant formé dans ladite partie de liaison ;
- le passage axial et l'axe du pignon intermédiaire sont diamétralement opposés ;
- le faisceau de raccordement comporte un boîtier rigide qui est introduit axialement dans le passage axial et dont l'extrémité libre interne agencée au droit du passage radial comporte un connecteur pour le raccordement du faisceau à un faisceau extérieur comportant un connecteur complémentaire
- un premier tronçon d'extrémité axiale de la jupe du support fixe adjacent au moyeu de volant est ouvert axialement pour permettre la fixation du moyeu de volant au premier manchon denté qui est guidé en rotation à l'intérieur de ce premier tronçon d'extrémité axiale ;
- un second tronçon d'extrémité axiale de la jupe du support fixe est fermé par une bride pour sa fixation à l'extrémité supérieure de la colonne de direction ;
- le corps central, la partie intermédiaire de liaison et la jupe du support fixe sont réalisés venus de matière en une seule pièce, notamment par moulage.
- le pignon 90 est guidé en rotation et est retenu axialement par rapport au support fixe par l'intermédiaire d'une tige 92, d'axe Y-Y, qui est montée dans deux paliers opposés 94, réalisés dans une matière souple caoutchoutée.
- le guidage en rotation (58) du premier manchon denté (60, 62) à l'intérieur du premier tronçon d'extrémité axiale (54) est assuré par deux roulements à billes 58 maintenus en pression par un ressort hélicoïdal de compression 100 guidé dans une cage cylindrique 102.
- la cage cylindrique 102 comporte elle-même sur sa périphérie une ou plusieurs oreilles 104 destinées à assurer la fonction de rappel d'une manette de clignotant.

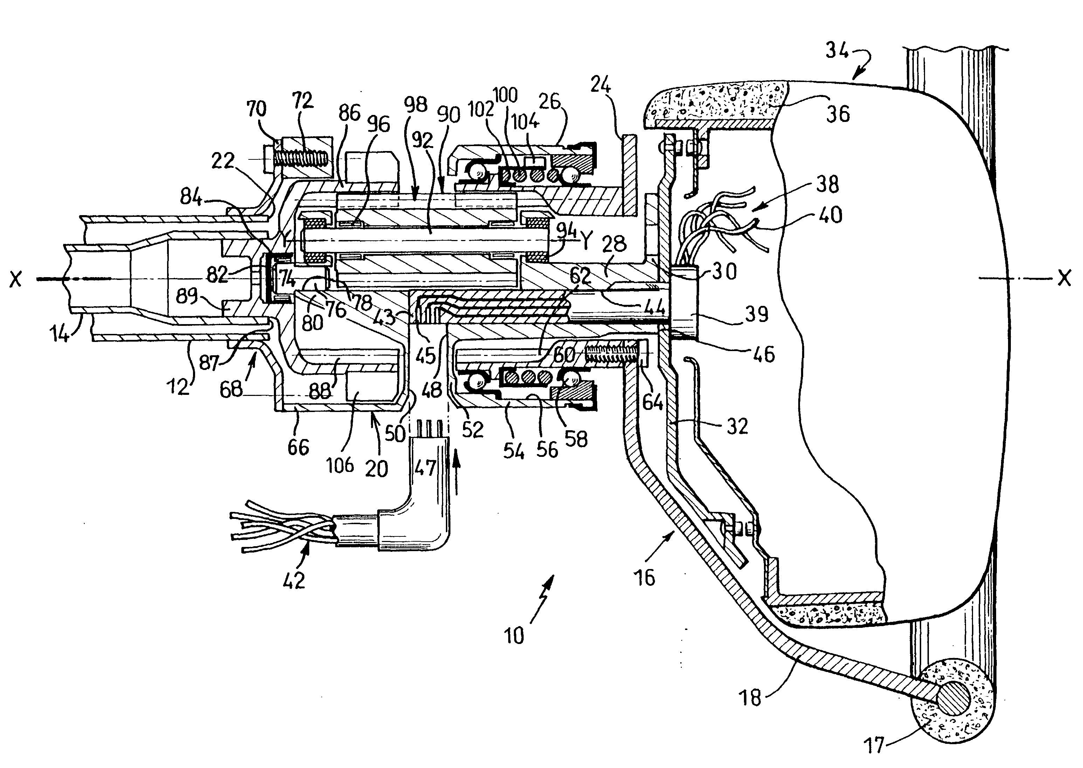

D'autres caractéristiques et avantages de l'invention apparaîtront à la lecture de la description détaillée qui suit pour la compréhension de laquelle on se reportera au dessin annexé dont la figure unique est une vue schématique qui illustre la partie supérieure d'une colonne de direction de véhicule automobile appartenant à un dispositif de commande de direction réalisé conformément aux enseignements de l'invention et qui est représentée en section axiale.

On a représenté sur les figures un dispositif 10 de commande d'une direction de véhicule automobile qui comporte, de manière connue, une colonne tubulaire de direction 12 à l'intérieur de laquelle est monté tournant un arbre de direction 14 qui lui est coaxial d'axe X-X.

Des moyens de guidage en rotation de l'arbre de direction 14 à l'intérieur de la colonne tubulaire de direction 12, non représentés, sont réalisés sous la forme de roulements interposés entre ces de deux éléments.

On a aussi représenté sur la figure unique un volant de direction 16 comportant, selon une conception connue, une jante circulaire 17 reliée au mécanisme de direction à plusieurs branches 18 réparties angulairement de manière régulière ou irrégulière.

On a représenté sur la figure unique l'axe général de rotation X-X de la colonne de direction, qui correspond à l'axe commun à l'arbre de direction 14 et à la colonne de direction tubulaire 12.

Le volant 16 est ainsi coaxial, d'axe X-X à la colonne de direction et il est relié à l'arbre de direction 12, afin d'entraîner ce dernier en rotation dans les deux sens, par l'intermédiaire d'un mécanisme à engrenages agencé dans un support fixe 20.

Le support fixe 20 est réalisé en une seule pièce, par exemple par moulage, et il s'étend axialement, de la gauche vers la droite en considérant la figure unique, entre l'extrémité libre supérieure 22 de la colonne tubulaire de direction 14 et le plan dans lequel s'étend le moyeu annulaire 24 en forme de disque plat auquel sont reliées les branches 18 du volant 16.

Le support fixe en une seule pièce 20 est constitué pour l'essentiel par une enveloppe ou jupe extérieure 26, de forme générale tubulaire cylindrique d'axe X-X, et d'un corps ou noyau central 28.

Le noyau ou corps central 28 est une pièce de forme générale allongée et massive qui s'étend axialement vers le haut, c'est-à-dire vers la droite en considérant la figure unique, au-delà de la jupe 26 et à travers le moyeu 24 du volant 16, et qui se termine par une bride radiale extérieure 30 pour la fixation d'une platine 32 appartenant à un bloc d'accessoires 34.

Le bloc d'accessoires 34 comporte un élément d'habillage 36 qui entoure les différents composants du bloc d'accessoires.

Selon une conception générale connue, le bloc d'accessoires 36 peut comporter par exemple des éléments de commande des équipements du véhicule ainsi que, de préférence, un coussin gonflable agencé en position centrale au centre du volant 16.

Au sens de l'invention, le bloc d'accessoires 34 est fixe, c'est-à-dire qu'il est immobile en rotation autour de l'axe X-X lorsque que le conducteur tourne le volant 16.

Les différents composants appartenant au bloc d'accessoires 36 sont reliés électriquement à l'extérieur du mécanisme de direction par un faisceau de câblage électrique 38 comportant notamment des fils électriques 40 permettant de relier ses composants à un autre câble ou faisceau de câblage 42 qui est lui-même relié au(x) circuit(s) électrique(s) du véhicule.

Afin de permettre le passage du faisceau électrique de raccordement 38 à travers le mécanisme de direction, le corps central 28 comporte un premier passage 44 d'orientation axiale qui débouche, à son extrémité axiale de droite 46, à l'intérieur du bloc fixe d'accessoires 36 et dont l'autre extrémité axiale de gauche 48 débouche dans un second passage 50, d'orientation radiale, qui est formé dans une partie 52 du support fixe 20 qui s'étend radialement dans un plan transversal, c'est-à-dire dans un plan perpendiculaire à l'axe X-X, et qui relie la jupe périphérique 26 au corps central 28.

Les fils 40 du faisceau 38 sont par exemple noyés dans un boîtier 39 qui est introduit axialement, de droite à gauche, dans le passage axial 44 et son extrémité libre inférieure 43, à gauche, est conformée en connecteur femelle 45 qui peut recevoir le connecteur mâle complémentaire 47 du câble 42.

Outre sa fonction de liaison, la partie d'orientation radiale 52 du support fixe 20 partage globalement l'espace interne de la jupe 26, ainsi que cette dernière, en une première partie d'extrémité supérieure située longitudinalement à droite en considérant la figure unique et qui est adjacente au volant 16, 24 et au bloc fixe d'accessoires 34, et en une seconde partie d'extrémité inférieure, située et longitudinalement à gauche en considérant la figure unique, qui est adjacente à l'extrémité libre supérieure 22 de la colonne tubulaire de direction 12.

La première partie 54 de la jupe 26 délimite un logement 56 pour une paire de roulements à billes 58 qui guident en rotation, et qui retiennent axialement, un premier manchon 60 qui est coaxial à l'axe X-X et qui est denté intérieurement 62 afin de constituer un premier élément d'engrenage qui est lié en rotation au moyeu 24 du volant 16 par une série de vis axiales 64.

Les deux roulements à billes 58 sont maintenus en pression pour éviter tout jeu de fonctionnement par un ressort hélicoïdal de compression 100 guidé dans une cage cylindrique 102 comportant elle-même sur sa périphérie une ou plusieurs oreilles 104 destinées à assurer la fonction de rappel de clignotant.

La seconde partie d'extrémité 66 de la jupe 26 du support fixe 20 est liée en rotation à l'extrémité libre supérieure 22 de la colonne tubulaire de direction 12 par l'intermédiaire d'une bride 68 soudée sur la colonne 12 et dont la joue radiale 70 est fixée à la seconde partie 66 par des vis axiales 72.

La seconde partie d'extrémité 66 de la jupe 26 loge un second manchon cylindrique 86, denté intérieurement 88, qui constitue un second élément d'engrenage au sens de l'invention qui est coaxial, d'axe X-X, au premier manchon denté 60, 62.

Ce second manchon denté 86, 88 se prolonge axialement vers la droite par une virole 89 de plus petit diamètre grâce à laquelle il est lié en rotation à l'arbre de direction 14, par exemple par emmanchement à force et/ou par soudage. L'arbre de direction 14 est centré par rapport au support fixe 20 par l'intermédiaire de ce second manchon denté 86 - 88.

Le manchon 86 est centré par rapport au support fixe 20 par un pion de centrage 74 qui est un élément cylindrique étagé d'axe X-X dont la partie supérieure de droite de petit diamètre 76 est reçue dans un logement complémentaire 78 formé dans l'extrémité axiale inférieure 80 du corps central 28, et dont la partie inférieure de gauche 82 de plus grand diamètre est guidée en rotation, par l'intermédiaire d'un roulement à aiguilles 84, à l'intérieur d'un logement situé à l'extrémité du manchon 86 qui coopère avec l'arbre de direction.

Afin d'assurer l'entraînement en rotation de l'arbre de direction 14 par le volant 16, c'est-à-dire du second manchon denté 86, 88 par le premier manchon denté 60, 62, il est prévu un pignon intermédiaire denté 90, d'axe Y-Y qui est excentré par rapport à l'axe principal X-X et parallèle à ce dernier.

Plus précisément, le pignon 90 est guidé en rotation et est retenu axialement par rapport au support fixe par l'intermédiaire d'une tige 92, d'axe Y-Y, qui est montée dans deux paliers opposés 94 axialement et dont le tronçon central reçoit à rotation, avec interposition de deux roulements à aiguilles 96 le corps du pignon denté intermédiaire 90 qui est un corps tubulaire denté extérieurement.

Les deux paliers 94 sont réalisés dans une matière souple caoutchoutée dans le but de supprimer tout jeu entre les dents 98 du pignon 90 et les dents 62 du manchon 60 et 88 du manchon 86.

En outre, le manchon 86 peut comporter des dents extérieures 106 permettant l'immobilisation en rotation de l'ensemble de l'axe de direction lorsqu'un pêne (non représenté) pénètre suivant une technologie connue dans une des cavités laissée libre entre deux dents consécutives 106. Cette caractéristique constitue un antivol multi-positions.

Comme on peut le voir sur la figure unique, les dents 98 du pignon intermédiaire denté 90 engrènent en permanence d'une part avec les dents 62 du premier manchon 60 denté et, d'autre part, avec les dents 88 du second manchon denté 86.

En considérant la figure unique, l'axe Y-Y du pignon intermédiaire denté 90 est agencé de manière diamétralement opposé, par rapport à l'axe X-X, par rapport au premier passage axial 44 qui reçoit le boîtier 39 du faisceau 38 de raccordement électrique.

Ainsi, l'agencement selon l'invention du mécanisme à engrenages 60, 90, 86 assurant la liaison en rotation entre le volant 16 et l'arbre de direction 14 est particulièrement compact et ne présente aucune saillie radiale, par rapport à l'encombrement global de la jupe cylindrique 26, susceptible de présenter un risque pour les membres inférieurs du conducteur.

## Revendications

1. Dispositif (10) de commande de direction de véhicule automobile comportant une colonne de direction tubulaire (12), un arbre de direction (14) monté tournant à l'intérieur de la colonne de direction, un volant de direction (16) lié en rotation à l'extrémité supérieure libre (87) de l'arbre de direction, un bloc (34) d'accessoires, comportant par exemple un coussin gonflable, le bloc (34) d'accessoires étant monté au centre du volant (16) et fixe en rotation par rapport à la colonne de direction (12), par l'intermédiaire d'un support fixe (20) coaxial à l'arbre de direction (14), et un faisceau (38) de raccordement électrique qui s'étend, depuis le bloc central d'accessoires (34), axialement à travers le support fixe (20) pour être relié radialement à un élément extérieur de connexion (42, 47), et du type dans lequel le support fixe (20) est monté à l'extrémité supérieure (22) de la colonne de direction tubulaire (14), le moyeu (24) de volant (16) est monté tournant par rapport au support fixe (20), et le moyeu de volant (24) est lié en rotation à l'arbre de direction (14) par un mécanisme à engrenages comportant deux organes dentés coaxiaux (60, 86) liés en rotation au moyeu de volant (24) et à l'arbre de direction (14) qui engrènent avec un organe denté intermédiaire (90) excentré par rapport à l'axe (X-X) de la colonne de direction, **caractérisé en ce que** l'organe denté intermédiaire est un pignon denté (90) dont une première extrémité axiale engrène avec un premier manchon denté intérieurement (60, 62) lié en rotation et coaxial au moyeu de volant (24) et dont la seconde extrémité engrène avec un second manchon (86, 88) denté intérieurement et lié en rotation à l'arbre de direction (14).

2. Dispositif selon la revendication 1, **caractérisé en ce que** le faisceau de raccordement (38, 39, 40) s'étend axialement à l'intérieur du corps central (28) du support fixe (20) qui traverse le premier manchon denté (60).

3. Dispositif selon la revendication 2, **caractérisé en ce que** le support fixe (20) comporte une jupe tubulaire (26) qui est reliée radialement au corps central (28) par une partie de liaison (52) qui s'étend entre les extrémités axiales en vis-à-vis des deux manchons dentés (60, 86).

4. Dispositif selon la revendication 3, **caractérisé en ce que** le faisceau de raccordement (38) s'étend axialement à travers un passage axial (44) formé dans le corps central (28) qui se prolonge par un passage radial (50) débouchant formé dans ladite partie de liaison (52).

5. Dispositif selon l'une des revendications 3 ou 4, **caractérisé en ce que** le passage axial (44) et l'axe (Y-Y) du pignon intermédiaire (90) sont diamétralement opposés.

6. Dispositif selon la revendication 5, **caractérisé en ce que** le pignon 90 est guidé en rotation et est retenu axialement par rapport au support fixe par l'intermédiaire d'une tige 92, d'axe Y-Y, qui est montée dans deux paliers opposés 94, réalisés dans une matière souple caoutchoutée.

7. Dispositif selon l'une des revendications 4 à 6, **caractérisé en ce que** le faisceau de raccordement comporte un boîtier rigide (39) qui est introduit axialement dans le passage axial (44) et dont l'extrémité libre interne (43) agencée au droit du passage radial (50) comporte un connecteur (45) pour le raccordement du faisceau (38, 40) à un faisceau extérieur (42) comportant un connecteur complémentaire (47).

8. Dispositif selon l'une quelconque des revendications 3 à 7, **caractérisé en ce qu'**un premier tronçon d'extrémité axiale (54) de la jupe (26) du support fixe (20) adjacent au moyeu de volant (24) est ouvert axialement pour permettre la fixation du moyeu de volant (24) au premier manchon denté (60, 64) qui est guidé en rotation (58) à l'intérieur de ce premier tronçon d'extrémité axiale (54).

9. Dispositif selon la revendication 8, **caractérisé en ce que** le guidage en rotation (58) du premier manchon denté (60, 62) à l'intérieur du premier tronçon d'extrémité axiale (54) est assuré par deux roulements à billes (58) maintenus en pression par un ressort hélicoïdal de compression (100) guidé dans une cage cylindrique (102).

10. Dispositif selon la revendication 9, **caractérisé en ce que** la cage cylindrique (102) comporte elle-même sur sa périphérie une ou plusieurs oreilles (104) destinées à assurer la fonction de rappel d'une manette de clignotant.

11. Dispositif selon l'une quelconque des revendications 3 à 10, **caractérisé en ce qu'**un second tronçon d'extrémité axiale (66) de la jupe (26) du support fixe (20) est fermé par une bride (68) pour sa fixation à l'extrémité supérieure (22) de la colonne de direction (14).

12. Dispositif selon l'une quelconque des revendications 3 à 11, **caractérisé en ce que** le corps central (28), la partie intermédiaire de liaison (52) et la jupe (26) du support fixe (20) sont réalisés venus de matière en une seule pièce, notamment par moulage.

13. Dispositif selon l'une quelconque des revendications 3 à à 12, **caractérisé en ce que** le manchon (86) comporte des dents extérieures (106) qui permettent l'immobilisation en rotation de l'ensemble de l'axe de direction par l'introduction du pêne d'une serrure dans l'une des cavités interdentales.

## Claims

1. Device (10) for controlling steering of an automotive vehicle comprising a tubular steering column (12), a steering shaft (14) mounted in a rotating manner in the interior of the steering column, a steering wheel (16) rotationally connected to the upper free extremity (87) of the steering shaft, an accessory module (34) comprising, for example, an inflatable airbag, the accessory module (34) being mounted in the centre of the steering wheel (16) and rotationally fixed with respect to the to the steering column (12) by means of a fixed support (20) coaxial to the steering shaft (14), and an electrical connection harness (38) that extends from the central accessory module (34) axially through the fixed support (20) in order to be connected radially to an exterior connecting element (42, 47), and of the type wherein the fixed support (20) is mounted at the upper extremity (22) of the tabular steering column (14), the hub (24) of the steering wheel (16) is mounted in a rotating manner with respect to the fixed support (20), and the steering wheel hub (24) is connected rotationally to the steering shaft (14) by a gearing mechanism comprising two coaxial toothed members (60, 86) rotationally connected to the steering wheel hub (24) and to the steering shaft (14); that engage with an intermediate toothed member (90) that is eccentric with respect to. the axis (X-X) of the steering column, **characterised in that** the intermediate toothed member is a toothed gear (90), a first axial extremity of which meshes with a first sleeve with internal teeth (60, 62) rotationally connected and coaxial to the steering wheel hub (24), and the second extremity of which meshes with a second sleeve with internal teeth (86, 88) and connected rotationally to the steering shaft (14).

2. Device according to claim 1, **characterised in that** the connection harness (38, 39, 40) extends axially in the interior of the central body (28) of the fixed support (20) that goes through the first toothed sleeve (60).

3. Device according to claim 2, **characterised in that** the fixed support (20) comprises a tubular skirt (26) that is connected radially to the central body (28) by means of a connecting part (52) that extends between the axial extremities opposite the two toothed sleeves (60, 86).

4. Device according to claim 3, **characterised in that** the connection harness (38) extends axially through an axial passage (44) formed in the central body (28) that is extended by an adjoining radial passage (50) formed in said connecting part (52).

5. Device according to one of claims 3 or 4, **characterised in that** the axial passage (44) and the axis (Y-Y) of the intermediate gear (90) are diametrically opposite.

6. Device according to claim 5, **characterised in that** the gear (90) is rotationally guided and is retained axially with respect to the fixed support by means of a rod (92) with an axis Y-Y, that is mounted in two opposite bearings 94, produced in a flexible, rubberised material.

7. Device according to one of claims 4 to 6, **characterised in that** the connection harness comprises a rigid casing (39) that is introduced axially into the axial passage (44), and the internal free extremity (43) of which, arranged opposite the radial passage (50), comprises a connector (45) for connecting the wiring harness (38, 40) to an external harness (42) comprising a complementary connector (47).

8. Device according to any one of claims 3 to 7, **characterised in that** a first axial extremity portion (54) of the skirt (26) of the fixed support (20) adjacent to the steering wheel hub (24) is open axially in order to allow the fixing of the steering wheel hub (24) to the first toothed sleeve (60, 64) that is guided in a rotational manner (58) in the interior of this first axial extremity portion (54).

9. Device according to claim 8, **characterised in that** rotational guiding (58) of the first toothed sleeve (60, 62) in the interior of the first axial extremity portion (54) is provided by two ball bearings (58) kept under pressure by a helical compression spring (100) guided in a cylindrical cage (102).

10. Device according to claim 9, **characterised in that** the cylindrical cage (102) itself comprises upon its periphery one or more lugs (104) intended to provide the return function for an indicator stalk.

11. Device according to any one of claims 3 to 10, **characterised in that** a second axial extremity portion (66) of the skirt (26) of the fixed support (20) is closed by a flange (68) in order to fix it to the upper extremity (22) of the steering column (14).

12. Device according to any one of claims 3 to 11, **characterised in that** the central body (28), the intermediate connecting part (52) and the skirt (26) of the fixed support (20) are manufactured from material in a single piece, particularly by moulding.

13. Device according to any one of claims 3 to 12, **characterised in that** the sleeve (86) comprises exterior teeth (106) that allow rotational immobilisation of the steering axis assembly by introduction of a locking bolt into one of the cavities between the teeth.

## Patentansprüche

1. Vorrichtung (10) zur Betätigung der Lenkung eines Kraftfahrzeuges, mit einer rohrförmigen Lenksäule (12), einer Lenkwelle (14), die drehbar im Inneren der Lenksäule angeordnet ist, einem Lenkrad (16), das drehfest mit dem oberen freien Ende (87) der Lenkwelle verbunden ist, einer Zusatzeinrichtung (34), die zum Beispiel ein aufblasbares Prallkissen aufweist, wobei die Zusatzeinrichtung (34) in der Mitte des Lenkrades (16) angeordnet ist und drehfest bezüglich der Lenksäule (12) befestigt ist mittels einer feststehenden Halterung (20), die koaxial zur Lenkwelle (14) ist und mit einem Kabelbaum (38) zur elektrischen Verbindung , der sich von der Zusatzeinrichtung (34) ausgehend axial durch die feststehende Halterung (20) hindurch erstreckt zur radialen Verbindung mit einem außen angeordneten Verbindungsteil (42, 47), wobei die feststehende Halterung (20) am oberen Ende (22) der rohrförmigen Lenksäule (14) angeordnet ist, die Nabe (24) des Lenkrades (16) bezüglich der feststehenden Halterung (20) drehbar ist und die Lenkradnabe (24) drehfest mit der Lenkwelle (14) über einen Zahnradmechanismus verbunden ist, der zwei koaxiale gezahnte Bauteile (60, 86) aufweist, die drehfest mit der Lenkradnabe (24) und mit der Lenkwelle (14) verbunden sind und die mit einem gezahnten Zwischenteil (90) kämmen, das exzentrisch bezüglich der Achse X-X der Lenksäule angeordnet ist, **dadurch gekennzeichnet, dass** das gezahnte Zwischenteil ein gezahntes Ritzel (90) ist, dessen erstes axiales Ende mit einer ersten innen gezahnten Buchse (60, 62 kämmt, die drehfest mit der Lenkradnabe (24) verbunden ist und koaxial zu ihr angeordnet ist und dessen zweites Ende mit einer zweiten innen gezahnten Buchse (86, 88) kämmt, die drehfest mit der Lenkwelle (14) verbunden ist.

2. Vorrichtung nach Anspruch 1, **dadurch gekennzeichnet dass** der Kabelbaum (38, 39, 40) sich in Axialrichtung im Inneren des Mittelteils (28) der feststehenden Halterung (20) erstreckt, das die erste gezahnte Buchse (60) durchsetzt.

3. Vorrichtung nach Anspruch 2, **dadurch gekennzeichnet, dass** die feststehende Halterung (20) eine rohrförmige Glocke (26) aufweist, die in Radialrichtung mit dem Mittelteil (28) über ein Verbindungsteil (52) verbunden ist, das sich zwischen den axialen Enden gegenüber den beiden gezahnten Buchsen (60, 89) erstreckt.

4. Vorrichtung nach Anspruch 3, **dadurch gekennzeichnet, dass** der Kabelbaum (38) sich in Axialrichtung durch einen axialen Durchlass (44) hindurch erstreckt, der im Mittelteil (28) ausgebildet ist und der durch einen radialen Durchlass (50) verlängert ist, der im Verbindungsteil (52) mündet.

5. Vorrichtung nach Anspruch 3 oder 4, **dadurch gekennzeichnet, dass** der axiale Durchlass (44) und die Achse Y-Y des Zwischenritzels (90) sich diametral gegenüber liegend angeordnet sind.

6. Vorrichtung nach Anspruch 5, **dadurch gekennzeichnet, dass** das Ritzel (90) in Drehrichtung geführt ist und in Axialrichtung bezüglich der feststehenden Halterung durch einen Stab (92) mit der Achse (Y-Y) gehalten wird, der in zwei sich gegenüber liegende Lager (94) eingesetzt ist, die aus kautschukartigem Material bestehen.

7. Vorrichtung nach einem der Ansprüche 4 bis 6, **dadurch gekennzeichnet, dass** der Kabelbaum mit einem steifen Gehäuse (39) versehen ist, das in Axialrichtung in den axialen Durchlass (44) eingesetzt ist und dessen freies inneres Ende (43), das gegenüber dem radialen Durchlass (50) angeordnet ist, einen Stecker (45) aufweist zur Verbindung des Kabelbaums (38, 40) mit einem äußeren Kabelbaum (42), der mit einem komplementären Stecker (47) versehen ist.

8. Vorrichtung nach einem der Ansprüche 3 bis 7, **dadurch gekennzeichnet, dass** ein erster axialer Endabschnitt (54) der Glocke (26) der feststehenden Halterung (20), der der Lenkradnabe (24) benachbart ist, in Axialrichtung offen ist um die Befestigung der Lenkradnabe (24) an der ersten gezahnten Buchse (60, 52) zu ermöglichen, die in Drehrichtung (58) im Inneren dieses ersten axialen Endabschnitts (54) geführt ist.

9. Vorrichtung nach Anspruch 8, **dadurch gekennzeichnet, dass** die Führung (58) in Drehrichtung der ersten gezahnten Buchse (60, 62) im Inneren des ersten axialen Endabschnitts (54) durch zwei Kugellager (58) erfolgt, die von einer schraubenförmigen Kompressionsfeder (100), die in einem zylindrischen Käfig (102) geführt wird, mit Druck beaufschlagt werden.

10. Vorrichtung nach Anspruch 9, **dadurch gekennzeichnet, dass** der zylindrische Käfig (102) auf seinem Umfang mit einem oder mehreren Anschlägen (104) versehen ist, die als Rückstellanordnung für einen Blinkerhebel dienen.

11. Vorrichtung nach einem der Ansprüche 3 bis 10, **dadurch gekennzeichnet, dass** der zweite axiale Endabschnitt (66) der Glocke (26) der feststehenden Halterung (20) durch einen Flansch (68) verschlossen ist zur Befestigung am oberen Ende (22) der Lenksäule (14).

12. Vorrichtung nach einem der Ansprüche 3 bis 11, **dadurch gekennzeichnet, dass** das Mittelteil (28), das Zwischenteil der Verbindung (52) und die Glocke (26) der feststehenden Halterung (20) als einstückiges Teil hergestellt werden, insbesondere durch ein Gießverfähren.

13. Vorrichtung nach einem der Ansprüche 3 bis 12, **dadurch gekennzeichnet, dass** die Buchse (86) mit Außenzähnen (106) versehen ist, die eine Feststellung in Drehrichtung der gesamten Lenkachse ermöglichen durch Eingreifen eines Schlosszapfens in eine der Aussparungen zwischen den Zähnen.
